# EUROPEAN PATENT APPLICATION

(11) **EP 4 261 930 A1**
(43) Date of publication of application: **18.10.2023**
(21) Application number: 21920833.7
(22) Date of filing: 20.12.2021
(51) Int. Cl.: H01M 4/133

(54) **NEGATIVE ELECTRODE SHEET OF LITHIUM ION BATTERY, LITHIUM ION BATTERY AND ELECTRONIC DEVICE**

(30) Priority: 25.01.2021 CN 202110096435
(71) Applicant: Huawei Technologies Co., Ltd., Shenzhen, Guangdong 518129 (CN)
(72) Inventor: LI, Zhixian, Shenzhen, Guangdong 518129 (CN); XU, Fan, Shenzhen, Guangdong 518129 (CN)
(74) Representative: Pfenning, Meinig & Partner mbB
(86) International application number: PCT/CN2021/139699
(87) International publication number: WO 2022/156459

(57) **Abstract**

This application provides a negative electrode plate of a lithium-ion battery, a lithium-ion battery, and an electronic device. The negative electrode plate of the lithium-ion battery includes a negative electrode current collector and an additional layer. The additional layer is disposed on a surface of the negative electrode current collector. The additional layer includes a negative electrode active substance, a protective substance, and a bonding agent. The negative electrode active substance includes at least one of a carbon material, an alloyed material, and a silicon material, the protective substance includes a nanometal oxide and a conductive agent, and the protective substance further includes lithium titanate or carbon-coated lithium titanate. When the lithium-ion battery is damaged, the protective substance can reduce a risk of thermal runaway caused by a short circuit between a positive electrode current collector of a positive electrode plate and the negative electrode active substance. In addition, the protective substance includes the lithium titanate or the carbon-coated lithium titanate, which does not affect a charging/discharging speed of the lithium-ion battery. Therefore, the lithium-ion battery has good electrochemical performance.

## Description

### CROSS-REFERENCE TO RELATED APPLICATIONS

This application claims priority to Chinese Patent Application No. 202110096435.0, filed with China National Intellectual Property Administration on January 25, 2021 and entitled "NEGATIVE ELECTRODE PLATE OF LITHIUM-ION BATTERY, LITHIUM-ION BATTERY, AND ELECTRONIC DEVICE", which is incorporated herein by reference in its entirety.

### TECHNICAL FIELD

This application relates to the field of electronic device technologies, and in particular, to a negative electrode plate of a lithium-ion battery, a lithium-ion battery, and an electronic device.

### BACKGROUND

As a green power supply, lithium-ion batteries are widely used in electronic products such as notebooks, tablets, and mobile phones thanks to advantages such as high energy density, a long cycle life, and a low self-discharge rate. However, the lithium-ion batteries bring convenience to our life, while safety risks of the lithium-ion batteries cannot be ignored. In an actual use process, burning issues such as an internal short circuit caused by external damage and thermal runaway caused accordingly occur on the lithium-ion batteries, which causes damage to an electronic device, starts a fire, or the like.

A lithium-ion battery includes a positive electrode plate, a separator film, and a negative electrode plate. The separator film is located between the positive electrode plate and the negative electrode plate. In the conventional technology, a protective layer is manufactured on the positive electrode plate, or a material of the positive electrode plate or the separator film is improved, so as to avoid a short circuit that occurs when the positive electrode plate is in contact with the negative electrode plate under an external force. However, in the foregoing technology, because the protective layer cannot protect a cross section of the positive electrode plate, the cross section of the positive electrode plate can still be in contact with the negative electrode plate, and a short circuit occurs. When the external force is sufficiently large, the external force can damage the separator film. As a result, the positive electrode plate is in contact with the negative electrode plate, and a short circuit occurs.

### SUMMARY

This application provides a negative electrode plate of a lithium-ion battery, a lithium-ion battery, and an electronic device, to reduce thermal runaway that occurs on the lithium-ion battery, and improve safety of the lithium-ion battery and the electronic device.

According to a first aspect, this application provides a negative electrode plate of a lithium-ion battery. The negative electrode plate includes a negative electrode current collector and an additional layer. The additional layer is disposed on a surface of the negative electrode current collector. The additional layer includes a negative electrode active substance, a protective substance, and a bonding agent. The negative electrode active substance includes at least one of a carbon material, an alloyed material, and a silicon material. The protective substance includes a nanometal oxide and a conductive agent. When the lithium-ion battery is damaged, the protective substance can reduce a risk of thermal runaway caused by a short circuit between a positive electrode current collector of a positive electrode plate and the negative electrode active substance.

The protective substance may further include lithium titanate or carbon-coated lithium titanate. Because both the lithium titanate and the carbon-coated lithium titanate have a high lithium intercalation potential (1.55 V vs. Li⁺/Li), no metal lithium dendrite is generated regardless of a rate at which charging and discharging are performed. The lithium titanate or the carbon-coated lithium titanate, as the protective substance on the surface of the negative electrode current collector, does not affect fast charging performance of the battery. In other words, the protective substance in this solution not only can resolve a problem that a severe short circuit occurs between the positive electrode current collector and the negative electrode active substance, but also does not affect a charging/discharging speed of the lithium-ion battery, so that the lithium-ion battery has good electrochemical performance, for example, fast charging performance.

When the additional layer is specifically prepared, a particle diameter of the lithium titanate or the carbon-coated lithium titanate may be less than 1 µm, and particle diameters of the nanometal oxide and the conductive agent may also be less than 1 µm. This helps improve uniformity of particle mixing, and helps reduce wear of the separator film caused by a rigid particle substance.

When the additional layer of the negative electrode plate is specifically disposed, the additional layer may be disposed on a surface of one side of the negative electrode current collector. In other words, the surface of the one side of the negative electrode current collector is provided with the additional layer, and a surface of the other side is not provided with the additional layer. In this solution, a volume of the negative electrode plate is small, which helps increase energy density of the lithium-ion battery. Alternatively, in another technical solution, the additional layers may be disposed on surfaces of two sides of the negative electrode current collector. In other words, the surfaces of the two sides of the negative electrode current collector are provided with the additional layers. In this solution, the additional layer of the negative electrode plate has good protection effect on the negative electrode plate, which helps improve safety of the lithium-ion battery.

The additional layer may include a two-layer structure, or may be of a one-layer structure. In a technical solution, the additional layer includes the two-layer structure: a negative electrode active substance layer and a protective substance layer. The negative electrode active substance layer includes the negative electrode active substance, and the protective substance layer includes the protective substance. The negative electrode active substance layer and the protective substance layer are sequentially stacked on the surface of the negative electrode current collector in a direction away from the negative electrode current collector. To be specific, the negative electrode active substance layer is fastened on the surface of the negative electrode current collector, and the protective substance layer is located on a surface of a side that is of the negative electrode active substance layer and that is away from the negative electrode current collector, and is fastened on the surface of the active substance layer. In this solution, the protective substance layer has good protection effect on the negative electrode active substance layer.

When the negative electrode plate is specifically disposed, the protective substance further includes the bonding agent. A mass content of the lithium titanate or the carbon-coated lithium titanate in the protective substance layer is 1% to 97%, a mass content of the conductive agent in the protective substance layer is 1% to 30%, a mass content of the nanometal oxide in the protective substance layer is 0% to 30%, and a mass content of the bonding agent in the protective substance layer is 2% to 40%. The foregoing materials are mixed in a corresponding ratio, then stirred in a solvent evenly, and fastened to the surface of the negative electrode active substance layer, to form the protective substance layer.

To reduce a volume of the negative electrode plate occupied by the protective substance layer, a thickness of the protective substance layer is less than or equal to a thickness of the negative electrode active substance layer. For example, the thickness of the protective substance layer may be 3 µm to 5 µm. The protective substance layer in this solution occupies small space, which helps increase energy density of the lithium-ion battery.

When the additional layer is of the one-layer structure, the protective substance and the negative electrode active substance of the additional layer are an integrated mixed layer. In other words, after the protective substance and the negative electrode active substance are mixed, the integrated mixed layer is formed. The additional layer in this solution has a simple structure, so that a preparation process can be simplified, and preparation efficiency can be improved. In addition, the protective substance is distributed in the entire integrated mixed layer, and a thickness that takes effect is large, so that a thermal failure caused by a large amount of heat generated by the positive electrode current collector and the negative electrode active substance can be better prevented.

When the negative electrode plate is specifically disposed, the protective substance further includes the bonding agent. A mass content of the lithium titanate or the carbon-coated lithium titanate in the protective substance is 1% to 97%, a mass content of the conductive agent in the protective substance is 1% to 30%, a mass content of the nanometal oxide in the protective substance is 0% to 30%, and a mass content of the bonding agent in the protective substance is 2% to 40%. The foregoing materials and the negative electrode active substance are mixed in a corresponding ratio, and then stirred in the solvent evenly, to form the integrated mixed layer.

When the integrated mixed layer is specifically prepared, a mass content of the protective substance in the integrated mixed layer is less than or equal to 30%. The protective substance in this solution occupies small space, which helps increase energy density of the lithium-ion battery.

In the foregoing solution, the conductive agent in the protective substance may include at least one of conductive carbon and a carbon nanotube. In other words, the conductive agent may include the conductive carbon or the carbon nanotube, or may include both the conductive carbon and the carbon nanotube.

The bonding agent includes at least one of polyvinylidene fluoride, styrene butadiene rubber, carboxymethyl cellulose, polyacrylic acid, polyacrylonitrile, polyethylene oxide, polypropylene oxide, polyvinylidene fluoride-hexafluoropropylene copolymer, polymethyl methacrylate, and polytetrafluoroethylene. This is not limited in this application.

The nanometal oxide includes at least one of silicon oxide, boehmite, aluminum oxide, zirconia, zinc oxide, and titanium oxide. In other words, the nanometal oxide may include one of, or two or more of silicon oxide, boehmite, aluminum oxide, zirconia, zinc oxide, and titanium oxide. This is not limited in this application.

According to a second aspect, this application further provides a lithium-ion battery. The lithium-ion battery includes the negative electrode plate of the lithium-ion battery in any one of the foregoing technical solutions, and further includes an enclosure, a positive electrode plate, a separator film, and an electrolyte. The positive electrode plate, the separator film, and the negative electrode plate are arranged sequentially. The positive electrode plate, the separator film, and the negative electrode plate are disposed in the enclosure by winding or folding, and the electrolyte is filled in the enclosure. The lithium-ion battery in this solution may be used in any electronic device that needs power supply. There is a low probability that a positive electrode current collector of the positive electrode plate of the lithium-ion battery is in contact with an active substance of the negative electrode plate, and less heat is generated. Therefore, the lithium-ion battery is not prone to thermal runaway, and has high safety. In addition, this helps maintain charging efficiency of the lithium-ion battery.

According to a third aspect, this application further provides an electronic device. The electronic device includes the foregoing lithium-ion battery. The lithium-ion battery is not prone to burning or explosion, and has high safety. In addition, a charging/discharging speed of the lithium-ion battery is not affected, so that the lithium-ion battery has good electrochemical performance.

### BRIEF DESCRIPTION OF DRAWINGS

FIG. 1 is a schematic diagram of a structure of an electronic device according to an embodiment of this application;
FIG. 2 is a schematic diagram of a structure of a lithium-ion battery according to an embodiment of this application;
FIG. 3 is a schematic diagram of a structure of arrangement of a positive electrode plate, a separator film, and a negative electrode plate according to an embodiment of this application;
FIG. 4 is a schematic diagram of a structure of arrangement of a positive electrode plate, a separator film, and a negative electrode plate in the conventional technology;
FIG. 5 is a schematic diagram of a structure of a negative electrode plate of a lithium-ion battery according to an embodiment of this application;
FIG. 6 is a schematic diagram of another structure of a negative electrode plate of a lithium-ion battery according to an embodiment of this application;
FIG. 7 is a schematic diagram of still another structure of a negative electrode plate of a lithium-ion battery according to an embodiment of this application; and
FIG. 8 is a schematic diagram of yet another structure of a negative electrode plate of a lithium-ion battery according to an embodiment of this application.

### Descriptions of reference numerals:

100: housing; 200: lithium-ion battery; 210: enclosure; 220: positive electrode plate; 221: positive electrode current collector; 222: positive electrode active substance layer; 230: negative electrode plate; 231: negative electrode current collector; 232: additional layer; 233: negative electrode active substance layer; 234: protective substance; 240: positive tab; 250: negative tab; 260: separator film; 270: electrolyte.

### DESCRIPTION OF EMBODIMENTS

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

Reference to "an embodiment", "specific embodiments", or the like described in this specification indicates that one or more embodiments of this application include a specific feature, structure, or characteristic described with reference to embodiments. The terms "include", "contain", "have", and their variants all mean "include but are not limited to", unless otherwise specifically emphasized in another manner.

For ease of understanding a negative electrode plate of a lithium-ion battery, a lithium-ion battery, and an electronic device provided in embodiments of this application, the following first describes an application scenario thereof. In a process of using the electronic device, a power supply apparatus is usually required to supply power to the electronic device. Currently, a lithium-ion battery is usually selected as the power supply apparatus for a relatively small electronic device, especially a mobile electronic device. The lithium-ion battery has high energy density, a long cycle life and a low self-discharge rate. However, the lithium-ion battery has an internal short circuit risk. When the lithium-ion battery is damaged by an external force, for example, the lithium-ion battery is damaged by a user by removing the lithium-ion battery, or the lithium-ion battery is damaged by a foreign object during use. Alternatively, at a high temperature, the separator film between the positive electrode plate and the negative electrode plate shrinks, which causes a short circuit between the positive electrode plate and the negative electrode plate, or a short circuit occurs when the positive electrode plate is in contact with the negative electrode plate due to a process defect. This is prone to the internal short circuit risk, or even thermal runaway, causing a fire or the like. To resolve the foregoing problems, this application provides a negative electrode plate of a lithium-ion battery, a lithium-ion battery, and an electronic device. The following describes the technical solutions of this application with reference to specific embodiments and accompanying drawings.

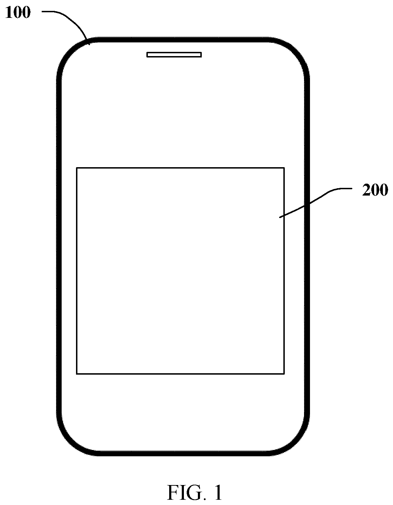

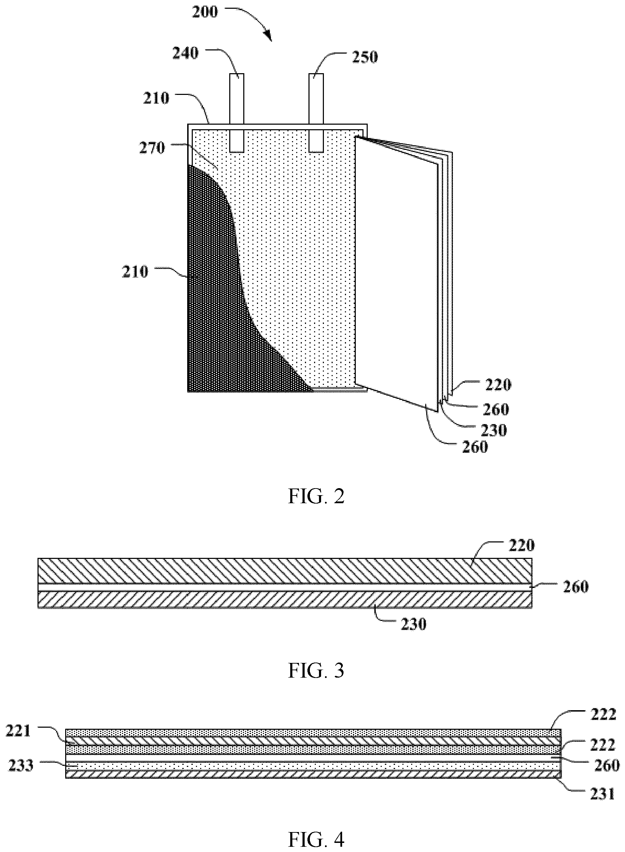

FIG. 1 is a schematic diagram of a structure of an electronic device according to an embodiment of this application. As shown in FIG. 1, the electronic device includes a housing 100, and a lithium-ion battery 200 and a functional component (not shown in the figure) disposed in the housing 100. The lithium-ion battery 200 is configured to supply power to the functional component of the electronic device, to implement a function of the electronic device. FIG. 2 is a schematic diagram of a structure of a lithium-ion battery according to an embodiment of this application. FIG. 3 is a schematic diagram of a structure of arrangement of a positive electrode plate, a separator film, and a negative electrode plate according to an embodiment of this application. As shown in FIG. 2 and FIG. 3, the lithium-ion battery includes an enclosure 210, a positive electrode plate 220, a negative electrode plate 230, a positive tab 240, a negative tab 250, a separator film 260, and an electrolyte 270. The positive electrode plate 220, the separator film 260, and the negative electrode plate 230 are arranged sequentially, layer structures formed after the positive electrode plate 220, the separator film 260, and the negative electrode plate 230 are arranged sequentially are wound or folded into a battery pole core, and the battery pole core is assembled into the enclosure 210. The electrolyte 270 is filled in the enclosure 210 to transport charges moving between the positive electrode plate 220 and the negative electrode plate 230. The positive tab 240 is connected to the positive electrode plate 220, and the negative tab 250 is connected to the negative electrode plate 230, to implement an electrical connection between the lithium-ion battery and the functional component of the electronic device.

FIG. 4 is a schematic diagram of a structure of arrangement of a positive electrode plate, a separator film, and a negative electrode plate in the conventional technology. Refer to FIG. 4. In the conventional technology, the positive electrode plate 220 includes a positive electrode current collector 221 and a positive electrode active substance layer 222 disposed on two sides of the positive electrode current collector 221, and the negative electrode plate 230 includes a negative electrode current collector 231 and a negative electrode active substance layer 233 disposed on a side that is of the negative electrode current collector 231 and that faces the positive electrode plate 220. The positive electrode current collector 221 may be specifically an aluminum foil, and the positive electrode active substance layer 222 is composed of a combination of one or more of lithium cobalt oxide, a ternary material (a nickel-cobalt-manganese system), a lithium manganese oxide, a lithium nickel oxide, and lithium iron phosphate. The separator film 260 is one of a polyethylene (PE) substance, a polypropylene (PP) substance, or a nonwoven fabric substance. An aperture of the separator film 260 needs to be of high ion passability, has a strong liquid absorption and moisture retention capability, keeps ion conductivity, and has electronic insulation, so that the positive electrode plate 220 can be isolated from the negative electrode plate 230 through mechanical isolation. In addition, the separator film 260 should have robust mechanical properties such as puncture strength or tensile strength, corrosion resistance, and good electrochemical stability. The electrolyte 270 is a lithium salt and an organic solvent containing carbon and oxygen. Contact between the positive electrode current collector 221 and the negative electrode active substance layer 233 is prone to thermal runaway. Therefore, a probability that the positive electrode current collector 221 is in contact with the negative electrode active substance layer 233 mainly needs to be reduced. To resolve this problem, in the conventional technology, improvement is performed on the positive electrode plate 220. Specifically, a safety coating including a material like lithium iron phosphate is coated or printed on a surface of the positive electrode current collector 221. In one aspect, a probability that the positive electrode current collector 221 is in contact with the negative electrode active substance layer 233 can be reduced. In another aspect, an ohmic resistance of the battery is increased, so that ohmic polarization of the battery increases in a short circuit process, energy of the battery in the short circuit process is not quickly released, and heat accumulation is avoided. However, there are also some disadvantages in this solution. For example, when the lithium-ion battery is damaged by an external force, a damaged cross section of the positive electrode plate 220 causes the positive electrode current collector 221 to be exposed, and there is accordingly a probability that the positive electrode current collector 221 is in contact with the negative electrode active substance layer 233.

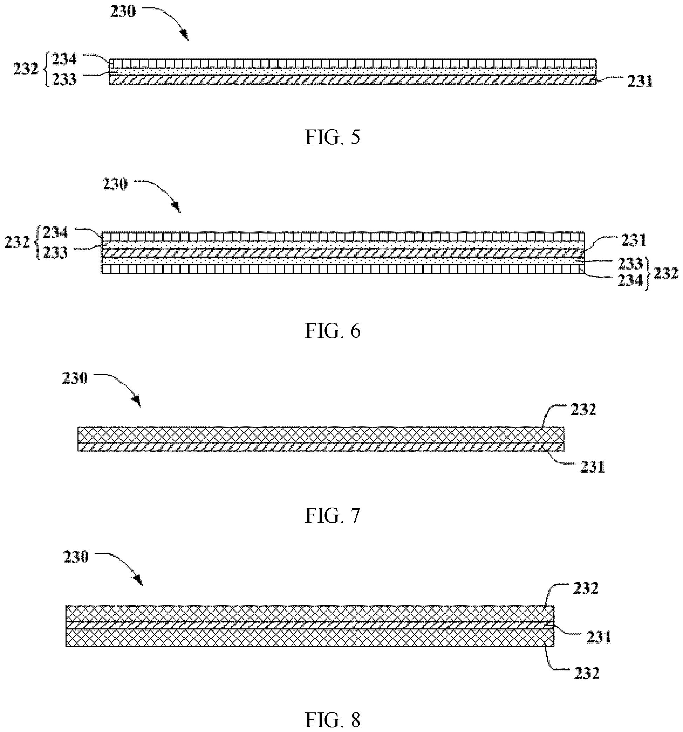

FIG. 5 is a schematic diagram of a structure of a negative electrode plate of a lithium-ion battery according to an embodiment of this application. As shown in FIG. 5, a structure of the negative electrode plate 230 of the lithium-ion battery according to this embodiment of this application includes the negative electrode current collector 231 and an additional layer 232. The additional layer 232 is disposed on a surface of the negative electrode current collector 231. The negative electrode current collector 231 may be specifically a copper foil. The additional layer 232 includes a negative electrode active substance and a protective substance. The negative electrode active substance includes at least one of a carbon material, an alloyed material, and a silicon material. The protective substance includes a nanometal oxide and a conductive agent. The additional layer 232 further includes a bonding agent, to form a layer structure fastened to the surface of the negative electrode current collector 231. The additional layer 232 is disposed on the surface of the negative electrode current collector 231. In this case, when the lithium-ion battery is damaged, the protective substance can reduce a risk of thermal runaway caused by a short circuit between the positive electrode current collector 221 of the positive electrode plate 220 and the negative electrode active substance. Compared with the conventional technology, in this solution, the protective substance disposed on the negative electrode plate 230 has poor conductivity, and polarization of the negative electrode plate 230 increases, that is, energy inside the negative electrode plate 230 is not easily released. Therefore, a problem that a severe short circuit between the positive electrode plate 220 and the negative electrode active substance can be resolved, and a large amount of heat generated between the positive electrode current collector 221 and the negative electrode active substance can be avoided or reduced. In this way, thermal runaway can be avoided or reduced, a risk of burning or explosion of the lithium-ion battery can be reduced, and reliability of the lithium-ion battery can be improved. Therefore, when the lithium-ion battery is damaged by an external force or the separator film 260 is damaged or shrinks, a short circuit between the positive electrode plate 220 and the negative electrode plate 230 can be reduced. In this way, safety of the lithium-ion battery can be improved.

In a specific embodiment, the negative electrode active substance uses at least one of the carbon material, the alloyed material, and the silicon material as a main material. After being mixed with the bonding agent and a solvent, the material may be dispersed evenly through physical mixing to obtain a slurry. The slurry is coated on the surface of the negative electrode current collector 231 and dried, so that the slurry may fixedly cover the surface of the negative electrode current collector 231. The main material may be at least one or a mixture of at least two of soft carbon (petroleum coke, needle coke, carbon fibers, carbonaceous mesophase spherule, and the like), hard carbon, graphite, or an alloyed lithium storage material (a silicon-based material, a tin-based material, and the like). The bonding agent includes at least one or a mixture of at least two of polyvinylidene fluoride (PVDF), styrene butadiene rubber (SBR), carboxymethyl cellulose (CMC), polyacrylic acid (PAA), polyacrylonitrile (PAN), polyethylene oxide (PEO), polypropylene oxide (PPO), polyvinylidene fluoride-hexafluoropropylene (PVDF-HFP) copolymer, polymethyl methacrylate (PMMA), or polytetrafluoroethylene (PTFE). The solvent is water, propane, ethanol, NMP (N-methyl pyrrolidone), or the like.

The protective substance includes the nanometal oxide and the conductive agent. The nanometal oxide may be at least one or a composite inorganic compound formed by at least two of silicon oxide (SiO₂), boehmite (AlOOH), aluminum oxide (Al₂O₃), zirconia (ZrO₂), zinc oxide (ZnO), or titanium oxide (TiOz). The conductive agent is conductive carbon or carbon nanotube, or a combination of the conductive carbon and the carbon nanotube. The bonding agent includes at least one or a mixture of at least two of polyvinylidene fluoride (PVDF), styrene butadiene rubber (SBR), carboxymethyl cellulose (CMC), polyacrylic acid (PAA), polyacrylonitrile (PAN), polyethylene oxide (PEO), polypropylene oxide (PPO), polyvinylidene fluoride-hexafluoropropylene (PVDF-HFP) copolymer, polymethyl methacrylate (PMMA), or polytetrafluoroethylene (PTFE). The solvent is water, propane, ethanol, NMP (N-methyl pyrrolidone), or the like.

Refer to FIG. 5. In a specific embodiment, the negative electrode plate 230 of the lithium-ion battery includes a protective substance layer 234, the negative electrode active substance layer 233, and the negative electrode current collector 231 that are sequentially stacked. The protective substance layer 234 includes conductive carbon and a carbon nanotube, nano-aluminum oxide, and a bonding agent, and mass ratios corresponding to the foregoing materials are 30%, 45%, and 25% respectively. The materials are physically stirred and mixed to form a mixed slurry. The mixed slurry may be specifically coated on a surface of the negative electrode active substance layer 233 by gravure coating, extrusion coating, or transfer coating. A thickness of the protective substance layer 234 is 3 µm.

The foregoing protective substance may further include lithium titanate or carbon-coated lithium titanate. There is relatively good conductive contact effect between carbon-coated lithium titanate particles and between the carbon-coated lithium titanate and the negative electrode current collector 231. Therefore, the carbon-coated lithium titanate has better conductivity and better electrochemical performance than the lithium titanate.

Both the lithium titanate and the carbon-coated lithium titanate have a high lithium intercalation potential (1.55 V vs. Li⁺/Li), and no metal lithium dendrite is generated regardless of a rate at which charging and discharging are performed. In addition, the lithium titanate is a "zero-strain material". When the lithium titanate is charged and discharged at a high rate, lithium ion intercalation and deintercalation do not cause a change of a crystalline structure of the lithium titanate, so that there is little impact on a structure of the lithium titanate. Therefore, the lithium titanate or the carbon-coated lithium titanate, as the protective substance on a surface of the negative electrode plate 230, does not affect fast charging performance of the battery. In other words, the protective substance in this solution not only can resolve a problem that a severe short circuit occurs between the positive electrode current collector 221 and the negative electrode active substance, but also does not affect a charging/discharging speed of the lithium-ion battery, so that the lithium-ion battery has good electrochemical performance, for example, fast charging performance.

In addition, compared with the negative electrode active substance and the electrolyte 270, the lithium titanate and the carbon-coated lithium titanate require higher heat for a decomposition reaction, and release lower heat through the decomposition reaction, so that the lithium titanate and the carbon-coated lithium titanate have higher thermal stability. Therefore, the lithium titanate and the carbon-coated lithium titanate can effectively prevent the positive electrode current collector 221 from contacting the negative electrode active substance, to avoid thermal runaway. The lithium titanate and the carbon-coated lithium titanate do not generate a metal lithium dendrite, and are not prone to pierce the separator film 260, so that thermal runaway caused by piercing is reduced, and safety of the lithium-ion battery is improved. Equilibrium potentials of the lithium titanate and the carbon-coated lithium titanate are higher than reduction potentials of most electrolyte solvents. Therefore, the lithium titanate and the carbon-coated lithium titanate do not react with the electrolyte 270, and do not form a passivation film, so that many side reactions are avoided, and safety of the battery is improved. At a high temperature, the lithium titanate and the carbon-coated lithium titanate can absorb oxygen generated by decomposition in a positive electrode, to reduce the side reactions in the positive electrode or the electrolyte 270, and thus reduce a risk of thermal runaway of the battery. Therefore, thermal runaway is not likely to occur. In addition, the lithium titanate and the carbon-coated lithium titanate are incombustible materials. Therefore, in this application, the protective substance formed by mixing the lithium titanate and the carbon-coated lithium titanate with the nanometal oxide can further reduce a probability of burning or explosion, and ensure electrochemical performance of the lithium-ion battery, so that the lithium-ion battery has a high charging/discharging speed.

When the additional layer 232 is specifically prepared, a particle diameter of the lithium titanate needs to be less than 1 µm, or a particle diameter of the carbon-coated lithium titanate needs to be less than 1 µm. Particle diameters of the nanometal oxide and the conductive agent are 1 nm to 1000 nm. Therefore, in one aspect, a thickness of the additional layer 232 can be reduced, and energy density of the lithium-ion battery can be increased. In another aspect, a size of the particle is small. Therefore, this helps improve uniformity of particle distribution and improve protection effect of the protective substance.

FIG. 6 is a schematic diagram of another structure of a negative electrode plate of a lithium-ion battery according to an embodiment of this application. Refer to FIG. 4 and FIG. 6. In an embodiment of this application, the additional layer 232 may be provided on a surface of a side of the negative electrode current collector 231. As shown in FIG. 4, the additional layer 232 may be specifically disposed on a surface of a side that is of the negative electrode current collector 231 and that faces the separator film 260. Therefore, a volume occupied by the negative electrode plate 230 can be reduced, and energy density of the lithium-ion battery can be increased. Alternatively, in another embodiment, as shown in FIG. 6, the additional layers 232 are provided on surfaces of two sides of the negative electrode current collector 231. In this solution, the additional layer 232 has better protection effect. For example, even if the negative electrode current collector 231 is penetrated by using an external force, that is, even if the positive electrode plate 220 penetrates the negative electrode current collector 231, the positive electrode plate 220 may be in contact with a protective substance of the additional layer 232. Therefore, thermal runaway is not likely to occur. In addition, during preparation of the lithium-ion battery, the positive electrode plate 220, the separator film 260, and the negative electrode plate 230 are usually arranged sequentially by stacking or winding. Therefore, the positive electrode plate 220 is also provided on a side that is of the negative electrode plate 230 and that is away from a group of arranged positive electrode plates 220, and the positive electrode plate 220 is not likely to be in contact with the negative electrode plate 230. Therefore, in this solution, the additional layer 232 located on a side that is of the negative electrode current collector 231 and that is away from the positive electrode plate 220 may also provide protection, so that thermal runaway is less likely to occur on the lithium-ion battery.

Still refer to FIG. 4 and FIG. 6. When the additional layer 232 is specifically prepared, the negative electrode active substance may be mixed with the bonding agent and the solvent, to form the negative electrode active substance layer 233. Specifically, the negative electrode active substance, the bonding agent, and the solvent may be physically stirred and mixed into a slurry, and then the slurry is coated on a surface of the negative electrode current collector 231 by using a gravure coating, extrusion coating, or transfer coating process and dried, to form the negative electrode active substance layer 233. The protective substance is mixed with the bonding agent and the solvent, to form the protective substance layer 234. Specifically, the protective substance, the bonding agent, and the solvent may be physically stirred and mixed into a slurry, and then the slurry is coated on a surface of the negative electrode active substance layer 233 by using a gravure coating, extrusion coating, or transfer coating process and dried, to form the protective substance layer 234. In other words, the additional layer 232 includes the negative electrode active substance layer 233 and the protective substance layer 234. The negative electrode active substance layer 233 and the protective substance layer 234 are sequentially stacked on the surface of the negative electrode current collector 231 in a direction away from the negative electrode current collector 231. In the embodiment shown in FIG. 4, the negative electrode plate 230 includes the protective substance layer 234, the negative electrode active substance layer 233, and the negative electrode current collector 231 that are sequentially stacked. In the embodiment shown in FIG. 6, the negative electrode plate 230 includes the protective substance layer 234, the negative electrode active substance layer 233, the negative electrode current collector 231, the negative electrode active substance layer 233, and the protective substance layer 234 that are sequentially stacked. In the foregoing two solutions, the protective substance layer 234 covers the negative electrode active substance layer 233. Therefore, protection effect is good.

In the foregoing embodiments, a mass content of the lithium titanate or the carbon-coated lithium titanate that is included in the protective substance layer 234 in the protective substance layer 234 is 1% to 97%, a mass content of the conductive agent in the protective substance layer 234 is 1% to 30%, a mass content of the nanometal oxide in the protective substance layer 234 is 0% to 30%, and a mass content of the bonding agent in the protective substance layer 234 is 2% to 40%. In this way, the protective substance layer 234 has good protection effect, and also has good electrochemical performance, to ensure fast charging performance of the lithium-ion battery.

When the protective substance layer 234 and the negative electrode active substance layer 233 are specifically prepared, a thickness of the protective substance layer 234 is less than or equal to that of the negative electrode active substance layer 233. Because the protective substance layer 234 cannot provide energy for the lithium-ion battery, the thickness of the protective substance layer 234 should be small, to reduce a volume occupied by the protective substance layer 234 in the lithium-ion battery, and increase energy density of the lithium-ion battery.

In a specific embodiment, the thickness of the protective substance layer 234 may be 1 µm to 10 µm, for example, 3 µm to 5 µm. In one aspect, good protection effect can be achieved. In another aspect, the volume occupied by the protective substance layer 234 can be further reduced. This helps ensure energy density of the lithium-ion battery.

Refer to FIG. 6. In a specific embodiment, the negative electrode plate 230 of the lithium-ion battery includes the protective substance layer 234, the negative electrode active substance layer 233, the negative electrode current collector 231, the negative electrode active substance layer 233, and the protective substance layer 234 that are sequentially stacked. The protective substance layer 234 includes lithium titanate, conductive carbon, nano-aluminum oxide, and a bonding agent, and mass ratios corresponding to the foregoing materials are 90%, 2%, 5%, and 3% respectively. After the solvent is added, the materials are physically stirred and mixed to form a mixed slurry. The mixed slurry may be specifically coated on the surfaces of the negative electrode active substance layers 233 on the two sides of the negative electrode current collector 231 by gravure coating, extrusion coating, or transfer coating. A thickness of each protective substance layer 234 is 3 µm.

FIG. 7 is a schematic diagram of still another structure of a negative electrode plate of a lithium-ion battery according to an embodiment of this application. FIG. 8 is a schematic diagram of yet another structure of a negative electrode plate 230 of a lithium-ion battery according to an embodiment of this application. Refer to FIG. 7 and FIG. 8. In another embodiment of this application, the protective substance and the negative electrode active substance in the additional layer 232 are an integrated mixed layer. In other words, the protective substance, the negative electrode active substance, the bonding agent, and the solvent are physically stirred and mixed into a slurry, and then the slurry is coated on the surface of the negative electrode current collector 231 by using a gravure coating, extrusion coating, or transfer coating process and dried, to form the integrated mixed layer. Alternatively, the negative electrode active substance, the bonding agent, and the solvent may be physically stirred and mixed into a slurry A, the protective substance, the bonding agent, and the solvent may be physically stirred and mixed into a slurry B, then the slurry A and the slurry B are mixed and stirred to form a final slurry, and then processes such as coating and drying are performed on the final slurry. In this solution, a process of preparing the negative electrode plate 230 is simple, and the negative electrode plate 230 can be prepared by using one process. For example, in the embodiment shown in FIG. 7, the integrated mixed layer is provided on a surface of one side of the negative electrode plate 230. In the embodiment shown in FIG. 8, the integrated mixed layers are provided on surfaces of two sides of the negative electrode plate 230.

In this solution, particles of the protective substance are located around particles of the negative electrode active substance, so that a safety protection net may be formed. After an internal short circuit occurs on the lithium-ion battery, the entire positive electrode current collector 221 is originally in contact with the negative electrode active substance. Currently, because there is the protective substance, the positive electrode current collector 221 is in contact with the protective substance in addition to the negative electrode active substance, so that a contact area between the positive electrode current collector 221 and the negative electrode active substance is reduced, and heat generated accordingly is reduced. In this way, burning or explosion caused by thermal runaway of the battery is avoided. In addition, when the positive electrode current collector 221 extends to a position closer to the negative electrode current collector 231 due to a large degree of damage caused by an external force, in a case in which the negative electrode active substance layer 233 and the protective substance layer 234 are independent of each other, the positive electrode current collector 221 already penetrates the protective substance layer 234, and is in contact with the negative electrode active substance layer 233, and consequently, thermal runaway occurs. However, in the technical solutions of this application, the negative electrode active substance and the protective substance are mixed. Even if the positive electrode current collector 221 extends to a position closer to the negative electrode current collector 231, the protective substance can still reduce the contact area between the positive electrode current collector 221 and the negative electrode active substance, so as to reduce heat accumulation, and still avoid thermal runaway.

When the negative electrode plate is specifically disposed, the protective substance further includes the bonding agent. A mass content of the lithium titanate or the carbon-coated lithium titanate in the protective substance is 1% to 97%, a mass content of the conductive agent in the protective substance is 1% to 30%, a mass content of the nanometal oxide in the protective substance is 0% to 30%, and a mass content of the bonding agent in the protective substance is 2% to 40%. The foregoing materials and the negative electrode active substance are mixed in a corresponding ratio, and then stirred in the solvent evenly, to form the integrated mixed layer.

In the foregoing embodiment, a mass content of the protective substance in the integrated mixed layer is less than or equal to 30%. Therefore, a volume occupied by the protective substance is small, which helps increase energy density of the lithium-ion battery. For example, the mass content of the protective substance in the integrated mixed layer may be 10%, 12%, 15%, 20%, 23%, 25%, 28%, or the like. This is not limited in this application.

This application further provides a lithium-ion battery. The lithium-ion battery includes the negative electrode plate of the lithium-ion battery in any one of the foregoing embodiments, and further includes an enclosure, a positive electrode plate, a separator film, and an electrolyte. The positive electrode plate, the separator film, and the negative electrode plate are arranged sequentially. The positive electrode plate, the separator film, and the negative electrode plate are disposed in the enclosure by winding or folding, and the electrolyte is filled in the enclosure. The lithium-ion battery in this application may be used in any electronic device that needs power supply. There is a low probability that a positive electrode current collector of the positive electrode plate of the lithium-ion battery is in contact with an active substance of the negative electrode plate, and less heat is generated. Therefore, the lithium-ion battery is not prone to thermal runaway, and has high safety. In addition, the lithium-ion battery includes lithium titanate or carbon-coated lithium titanate. Because both the lithium titanate and the carbon-coated lithium titanate have a high lithium intercalation potential (1.55 V vs. Li⁺/Li), no metal lithium dendrite is generated regardless of a rate at which charging and discharging are performed. The lithium titanate or the carbon-coated lithium titanate, as the protective substance on the surface of the negative electrode current collector, does not affect fast charging performance of the battery. In other words, the protective substance in this solution not only can resolve a problem that a severe short circuit occurs between the positive electrode current collector and the negative electrode active substance, but also does not affect a charging/discharging speed of the lithium-ion battery, so that the lithium-ion battery has good electrochemical performance, for example, fast charging performance.

This application further provides an electronic device. The electronic device includes the foregoing lithium-ion battery. The lithium-ion battery is not prone to burning or explosion, and has high safety. In addition, a charging/discharging speed of the lithium-ion battery is not affected, so that the lithium-ion battery has good electrochemical performance.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A negative electrode plate of a lithium-ion battery, comprising a negative electrode current collector and an additional layer disposed on a surface of one side of the negative electrode current collector, wherein
the additional layer comprises a negative electrode active substance and a protective substance, the negative electrode active substance comprises at least one of a carbon material, an alloyed material, and a silicon material, the protective substance comprises a nanometal oxide and a conductive agent, and the protective substance further comprises lithium titanate or carbon-coated lithium titanate.

2. The negative electrode plate of the lithium-ion battery according to claim 1, wherein the protective substance further comprises a bonding agent, a mass content of the lithium titanate or the carbon-coated lithium titanate in the protective substance is 1% to 97%, a mass content of the conductive agent in the protective substance is 1% to 30%, a mass content of the nanometal oxide in the protective substance is 0% to 30%, and a mass content of the bonding agent in the protective substance is 2% to 40%.

3. The negative electrode plate of the lithium-ion battery according to claim 1 or 2, wherein the additional layer comprises a negative electrode active substance layer and a protective substance layer, the negative electrode active substance layer comprises the negative electrode active substance, the protective substance layer comprises the protective substance, and the negative electrode active substance layer and the protective substance layer are sequentially stacked in a direction away from the negative electrode current collector.

4. The negative electrode plate of the lithium-ion battery according to claim 3, wherein a thickness of the protective substance layer is less than or equal to a thickness of the negative electrode active substance layer.

5. The negative electrode plate of the lithium-ion battery according to claim 3 or 4, wherein the thickness of the protective substance layer is 3 µm to 5 µm.

6. The negative electrode plate of the lithium-ion battery according to any one of claims 3 to 5, wherein a particle diameter of the lithium titanate or the carbon-coated lithium titanate is less than 1 µm.

7. The negative electrode plate of the lithium-ion battery according to any one of claims 3 to 6, wherein particle diameters of the nanometal oxide and the conductive agent are less than 1 µm.

8. The negative electrode plate of the lithium-ion battery according to claim 1 or 2, wherein the additional layer is an integral mixed layer.

9. The negative electrode plate of the lithium-ion battery according to claim 8, wherein a mass content of the protective substance is less than or equal to a mass content of the active substance.

10. The negative electrode plate of the lithium-ion battery according to claim 9, wherein a mass content of the protective substance in the integrated mixed layer is less than or equal to 30%.

11. The negative electrode plate of the lithium-ion battery according to any one of claims 1 to 10, wherein the additional layer is further disposed on a surface of the other side of the negative electrode current collector.

12. The negative electrode plate of the lithium-ion battery according to any one of claims 1 to 11, wherein the conductive agent comprises at least one of conductive carbon and a carbon nanotube.

13. The negative electrode plate of the lithium-ion battery according to any one of claims 2 to 12, wherein the bonding agent comprises at least one of polyvinylidene fluoride, styrene butadiene rubber, carboxymethyl cellulose, polyacrylic acid, polyacrylonitrile, polyethylene oxide, polypropylene oxide, polyvinylidene fluoride-hexafluoropropylene copolymer, polymethyl methacrylate, and polytetrafluoroethylene.

14. The negative electrode plate of the lithium-ion battery according to any one of claims 1 to 13, wherein the nanometal oxide comprises at least one of silicon oxide, boehmite, aluminum oxide, zirconia, zinc oxide, and titanium oxide.

15. A lithium-ion battery, comprising the negative electrode plate of the lithium-ion battery according to any one of claims 1 to 14, and further comprising an enclosure, a positive electrode plate, a separator film, and an electrolyte, wherein the positive electrode plate, the separator film, and the negative electrode plate are arranged sequentially, the positive electrode plate, the separator film, and the negative electrode plate are disposed in the enclosure, and the electrolyte is filled in the enclosure.

16. An electronic device, comprising the lithium-ion battery according to claim 15.
